# EUROPEAN PATENT APPLICATION

(11) **EP 2 963 193 A1**
(43) Date of publication of application: **06.01.2016**
(21) Application number: 15174366.3
(22) Date of filing: 29.06.2015
(51) Int. Cl.: E03B 1/00, E03B 5/00, E03B 9/00, E03B 3/04, F03G 7/05, E03B 1/02, F24F 5/00

(54) **METHOD OF TAKING WATER AND WATER INTAKE SYSTEM**

(30) Priority: 03.07.2014 JP 2014137752
(71) Applicant: Yokogawa Electric Corporation, Tokyo 180-8750 (JP)
(72) Inventor: Kanai, Hideki, Musashino-shi, Tokyo 180-8750 (JP); Yamamoto, Hiroshi, Musashino-shi, Tokyo 180-8750 (JP)
(74) Representative: Henkel, Breuer & Partner

(57) **Abstract**

A method of taking water according to one aspect of the present invention includes determining a first position based on a temperature distribution in a predetermined measuring range under water, and adjusting a water intake position to make the water intake position identical to the first position.

## Description

### BACKGROUND OF THE INVENTION

### Field of the Invention

The present invention relates to a method of taking water and a water intake system.

Priority is claimed on Japanese Patent Application No. 2014-137752, filed on July 3, 2014, the contents of which are incorporated herein by reference.

### Description of Related Art

Seawater and lake water (hereinafter, referred to as water resources) have been respectively taken from the ocean and lakes or marshes (hereinafter, referred to as the ocean and the like), and the water resources have been utilized in industrial facilities (hereinafter, referred to as water utilizing facilities). Such facilities include, for example, thermal power plants, seawater desalination facilities, and ocean thermal energy conversion power plants. There are some cases where water intake pipes are utilized for transferring the water resources to the water utilizing facilities and their water intake ports are installed on quays, revetments, bottoms of water, and the like. For example, in a deep seawater utilizing system disclosed in Japanese Patent No. 5437909, a water intake pipe is laid on bottoms of water, the depth of which is in the range from 600m to 800m, and an intake port is installed on the head of the water intake pipe.

If the water intake port is fixed and the water intake temperature is changed based on the season, the tide, the weather, or hydrographic conditions, the water resources, which have a temperature suitable for the purpose of utilization, are not necessarily obtained in the water utilizing facilities. Therefore, compared to the case where water resources are utilized, which have a temperature suitable for the purpose of utilization, there are some cases where water resources are not effectively utilized. If the temperature of the obtained water resources is not suitable for the purpose of utilization, there are some cases where the facility effectiveness of the water utilizing facilities is reduced and additional water resources are required.

### SUMMARY OF THE INVENTION

One aspect of the present invention provides a method of taking water and a water intake system, which control a water intake position so as to utilize water layers suitable for the purpose of utilization in water utilizing facilities. Thereby, the method of taking water and the water intake system enable effective utilization of water resources.

A method of taking water according to one aspect of the present invention may include determining a first position based on a temperature distribution in a predetermined measuring range under water, and adjusting a water intake position to make the water intake position identical to the first position.

In the above-sated method of taking water, determining the first position may include observing at least one of a water flow, an air flow, a weather, and hydrographic conditions, processing the temperature distribution based on the at least one of the water flow, the air flow, the weather, and the hydrographic conditions, and determining the first position based on the processed temperature distribution.

In the above-sated method of taking water, determining the first position may include determining the first position based on the temperature distribution over a region farther from a water intake port as a flow rate of the observed water flow increases.

In the above-sated method of taking water, determining the first position may include determining the first position based on the temperature distribution over a region distanced from a water intake port in an opposite direction to the flow direction of the observed water flow.

In the above-sated method of taking water, determining the first position may include determining the first position based on the temperature in each unit region defined by subdividing the measuring range.

In the above-sated method of taking water, determining the first position may include determining a size of each unit region based on a water intake amount.

In the above-sated method of taking water, determining the first position may include determining a unit region having a temperature corresponding to a target temperature among the unit regions as the first position.

A water intake system according to one aspect of the present invention may include a temperature distribution meter configured to measure a temperature distribution in a predetermined measuring range under water, a water intake configured to transfer water from the measuring range, a water intake position determiner configured to determine a first position based on the temperature distribution, and a water intake position adjuster configured to adjust a water intake position of the water intake to make the water intake position identical to the first position.

The above-sated water intake system may include an environment observer configured to observe at least one of a water flow, an air flow, a weather, and hydrographic conditions. The water intake position determiner may be configured to process the temperature distribution measured by the temperature distribution meter based on the observation result of the environment observer.

In the above-sated water intake system, the temperature distribution meter may include a plurality of temperature detectors. The temperature detectors may be arranged in two directions intersecting each other and parallel to a water surface, and a water depth direction.

In the above-sated water intake system, the water intake position determiner may be configured to determine the first position based on the temperature distribution over a region farther from a water intake port of the water intake as a flow rate of the observed water flow increases.

In the above-sated water intake system, the water intake position determiner may be configured to determine the first position based on the temperature distribution over a region distanced from a water intake port of the water intake in an opposite direction to the flow direction of the observed water flow.

In the above-sated water intake system, the water intake position determiner may be configured to determine the first position based on the temperature in each unit region defined by subdividing the measuring range.

In the above-sated water intake system, the water intake position determiner may be configured to determine a size of each unit region based on a water intake amount of the water intake.

In the above-sated water intake system, the water intake position determiner may be configured to determine a unit region having a temperature corresponding to a target temperature among the unit regions as the first position.

According to an aspect of the present invention, since water resources are taken at a water intake position, which is determined based on a measured temperature distribution, water, which has a temperature suitable for the purpose of utilization, can be taken based on the temperature distribution. Therefore, the water resources can be effectively utilized.

### BRIEF DESCRIPTION OF THE DRAWINGS

FIG. 1 is a diagram schematically showing the configuration of a water intake system according to a first embodiment of the present invention.
FIG. 2 is a block diagram showing the configuration of a water intake position controller according to the first embodiment of the present invention.
FIG. 3 is a diagram schematically showing the configuration of a water intake according to the first embodiment of the present invention.
FIG. 4 is a flowchart showing a water intake process according to the first embodiment of the present invention.
FIG. 5 is a flowchart showing a selection process of temperature judgement pattern according to the first embodiment of the present invention.
FIG. 6 is a diagram showing an example of temperature distribution measuring ranges.
FIG. 7A is a cross-section diagram showing an example of water intake water layers coordinates determined by a temperature judgement pattern selector according to the first embodiment of the present invention.
FIG. 7B is a cross-section diagram showing an example of water intake water layers coordinates determined by a temperature judgement pattern selector according to the first embodiment of the present invention.
FIG. 7C is a cross-section diagram showing an example of water intake water layers coordinates determined by a temperature judgement pattern selector according to the first embodiment of the present invention.
FIG. 7D is a cross-section diagram showing an example of water intake water layers coordinates determined by a temperature judgement pattern selector according to the first embodiment of the present invention.
FIG. 7E is a cross-section diagram showing an example of water intake water layers coordinates determined by a temperature judgement pattern selector according to the first embodiment of the present invention.
FIG. 7F is a cross-section diagram showing an example of water intake water layers coordinates determined by a temperature judgement pattern selector according to the first embodiment of the present invention.
FIG. 8A is a cross-section diagram showing an example of temperature measuring block sizes determined by the temperature judgement pattern selector according to the first embodiment of the present invention.
FIG. 8B is a cross-section diagram showing an example of temperature measuring block sizes determined by the temperature judgement pattern selector according to the first embodiment of the present invention.
FIG. 8C is a cross-section diagram showing an example of temperature measuring block sizes determined by the temperature judgement pattern selector according to the first embodiment of the present invention.
FIG. 8D is a cross-section diagram showing an example of temperature measuring block sizes determined by the temperature judgement pattern selector according to the first embodiment of the present invention.
FIG. 8E is a cross-section diagram showing an example of temperature measuring block sizes determined by the temperature judgement pattern selector according to the first embodiment of the present invention.
FIG. 8F is a cross-section diagram showing an example of temperature measuring block sizes determined by the temperature judgement pattern selector according to the first embodiment of the present invention.
FIG. 9 is a cubic diagram showing an example of candidate blocks determined by a water intake position determiner according to the first embodiment of the present invention.
FIG. 10 is a flowchart showing a determination process of a water intake position according to the first embodiment of the present invention.
FIG. 11 is a diagram schematically showing the configuration of a water intake system according to a second embodiment of the present invention.
FIG. 12 is a diagram schematically showing the configuration of a water intake system according to a third embodiment of the present invention.

### DETAILED DESCRIPTION OF THE INVENTION

Hereinafter, several embodiments of the present invention will be described in detail with reference to the drawings.

### <First Embodiment>

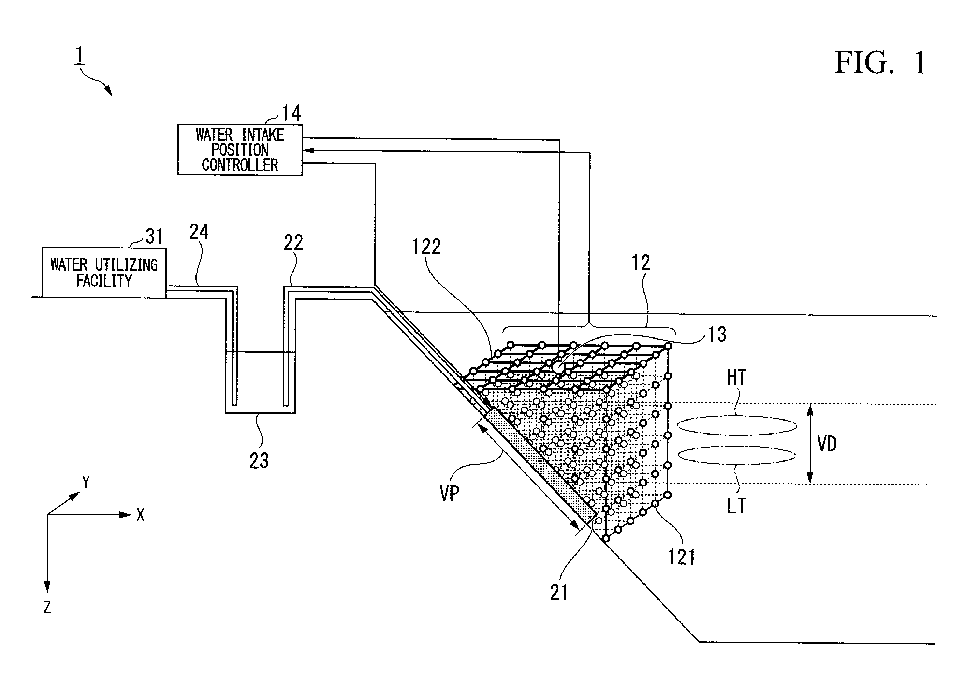

FIG. 1 is a diagram schematically showing the configuration of a water intake system 1 according to the first embodiment of the present invention.

The water intake system 1 includes a temperature distribution meter 12, a water flow meter 13, a water intake position controller 14, a water intake 21, and a water pipe 22. FIG. 1 shows a configuration where the water intake 21 is installed on revetments. The configuration of the water intake system 1 where the water intake 21 is installed on bottoms of water, a lake floor, or a riverbed is similar to that shown in FIG. 1. In FIG. 1, an X-direction, a Y-direction, and a Z-direction are perpendicular to each other in a three dimensional space. The X-direction and the Y-direction are parallel to a horizontal plane (water surface plane) and are perpendicular to each other. The Z-direction is a vertical direction (water depth direction).

The temperature distribution meter 12 includes a plurality of temperature distribution sensors 121 and a supporter 122. Each temperature distribution sensor 121 is supported by the supporter 122. The temperature distribution sensor 121 measures the temperature of water, which is contact with the temperature distribution sensor 121, generates a temperature signal, which indicates the temperature measured at the position of the temperature distribution sensor 121, and inputs the generated temperature signal into the water intake position controller 14. Arbitrary temperature distribution sensor 121 such as a thermocouple and a resistance temperature detector, which can detect temperatures, is applicable. Temperature distribution measured data, which indicates the temperature distribution (water temperature distribution) in a temperature distribution measuring range described later, is generated from the temperature signal received from each temperature distribution sensor 121.

The supporter 122 includes, for example, a floating body, which floats at the surface of water. The supporter 122 supports the plurality of temperature distribution sensors 121 so as to distribute the temperature distribution sensors 121 in an underwater predetermined three-dimensional range. This three-dimensional range may be referred to as a temperature distribution measuring range (temperature distribution measuring area). The temperature distribution measuring range indicates a range which vertically extends from the supporter 122 so as to have a predetermined size and shape.

In the example shown in FIG. 1, the supporter 122 is a square lattice which has a predetermined size, and supports the temperature distribution sensor 121 at each lattice point and the predetermined number of temperature distribution sensors 121 which are positioned in the vertical direction of the lattice points. In each of the two directions, which are vertical to each other in the horizontal direction, the number of lattice points is equal to six. At each lattice point, up to six temperature distribution sensors 121 can be supported. The interval between the adjacent temperature distribution sensors 121 is a predetermined interval d. The interval d is, for example, in a range from several meters to several tens of meters. In the temperature distribution measurement range, unit lattices are regularly arranged at intervals of d in each of the X-direction, Y-direction, and Z-direction. Each unit lattice has vertexes, each of which is a temperature measuring point. The length of the side of the unit lattice is equal to d. Thereby, the temperature distribution sensors 121 are arranged at intervals of d in each of the X-direction, Y-direction, and Z-direction. In the region shallower than the depth (water depth) 5d, the number of the temperature distribution sensors 121 supported by the supporter is less than 6, and the temperature distribution sensors 121, the number of which is defined based on the depth, are disposed.

The supporter 122 may include optical fiber temperature sensors instead of the temperature distribution sensors 121. Each optical fiber temperature sensor can measure water temperature at the site where the optical fiber is disposed. Therefore, as long as the optical fiber temperature sensor is disposed in the temperature distribution measuring range, the optical fiber temperature sensor is not necessarily required to be disposed at each lattice point.

The supporter 122 may be a structure, which is fixed to one of quays, revetments, and bottoms of water.

The water flow meter 13 is supported at any positon of the supporter 122 and measures the flow rate and the direction (flow direction) of water at the support positon. The water flow meter 13 generates a flow rate signal, which indicates the measured flow rate and the flow direction, and inputs the generated flow rate signal into the water intake position controller 14. In the example shown in FIG. 1, the water flow meter 13 is located at the center of the supporter 122 and measures the flow rate and the flow direction at the position of the water flow meter 13. The water flow meter 13 may be, for example, an electromagnetic flow meter or a Doppler flow meter.

The water intake position controller 14 determines a position (water intake position) where the water intake 21 takes water based on the temperature distribution measured data received from the temperature distribution meter 12. The operation mode of the water intake position controller 14 for determining the water intake position is set. The water intake position controller 14 determines, as the water intake position, a position where water, which has a target temperature associated with the operation mode or a temperature in a predetermined range including the target temperature, can be taken. The operation mode is set in accordance with the intended use of water in a water utilizing facility 31. When the water intake position controller 14 determines the water intake positon, the water intake position controller 14 may further use the flow rate signal received from the water flow meter 13. The process of determining the water intake position will be described later.

The water intake position controller 14 generates a water intake position control signal, which instructs the water intake at the determined water intake position, and inputs the generated water intake position control signal into the water intake 21. The configuration of the water intake position controller 14 will be described later.

At least part of the water intake 21 is positioned under water. The water intake 21 transfers the taken water to the water pipe 22, which is positioned outside the temperature distribution measuring range. The range where the water intake 21 can take water is variable. This range is a water intake positon variable range VP. At least part of the water intake positon variable range VP is included in the temperature distribution measuring range. The water intake 21 includes a water intake position changing mechanism described later, which takes water at the water intake position instructed by the water intake position control signal received from the water intake position controller 14. The water intake 21 may be, for example, one of a continuous siphon type water intake facility, a multistage water intake facility, and a multi-hole water intake facility.

The water pipe 22 is a pipe material for transferring the water received from the water intake 21 to a water intake pit 23.

The water intake pit 23 temporarily stores the water received from the water pipe 22. Thereby, the variation in the water supply amount with the passage of time is suppressed.

The water pipe 24 is a pipe material for transferring the water stored in the water intake pit 23 to the water utilizing facility 31.

The water utilizing facility 31 is an apparatus configured to utilize water received from the water pipe 24 or a facility including the apparatus. The water utilizing facility 31 includes a facility configured to utilize the water received from the water pipe 24 as a low-temperature heat source or a high-temperature heat source or to directly process or utilized the water, such as ocean thermal energy conversion power plants, thermal power plants (thermal power plants, nuclear power plants, geothermal power plants, and the like), seawater desalination facilities, aquaculture facilities, district cooling and heating facilities, and soil cooling agriculture facilities. The water utilizing facility 31 has an optimal temperature in accordance with the intended use of water in the water utilizing facility 31. For example, if the water received from the water pipe 24 is utilized as a low-temperature heat source in the ocean thermal energy conversion power plants, the generating efficiency increases as the temperature decreases. Therefore, the lowest temperature, which is available, corresponds to the optimal temperature. If the water received from the water pipe 24 is used as a high-temperature heat source in the ocean thermal energy conversion power plants, the generating efficiency increases as the temperature increases. Therefore, the highest temperature, which is available, corresponds to the optimal temperature.

When the water intake position controller 14 is set to have the optimal temperature as the target temperature, water, which has the target temperature or has a temperature in a predetermined range including the target temperature, is supplied to the water utilizing facility 31. Therefore, the water intake is effectively performed and the water is effectively utilized without being subjected to a temperature adjustment process. Therefore, since the surplus water intake is suppressed, the amount of the water intake is reduced and the environmental load is reduced.

Generally, there are some cases where, in the ocean and lakes or marshes, the deeper the depth is, the lower the water temperature is. A range of depth, which has a temperature in a predetermined range, is referred to as a water temperature layer. In the configuration shown in FIG. 1, the water temperature is changed due to factors such as the tidal level, the tidal current, and the weather. In the first embodiment, the water intake position of the water intake 21 is determined based on the temperature distribution measured by the temperature distribution meter 12 and the water intake 21 takes water from the determined water intake position. Therefore, water, which has a temperature suitable for the purpose of utilization, can be taken.

A water intake depth variable range VD has a depth range obtained by vertically projecting the above-stated water intake positon variable range VP. The water intake depth variable range VD has a depth range of each of a water temperature layer HT and a water temperature layer LT.

### (Configuration of water intake position controller)

Hereinafter, the configuration of the water intake position controller 14 will be described.

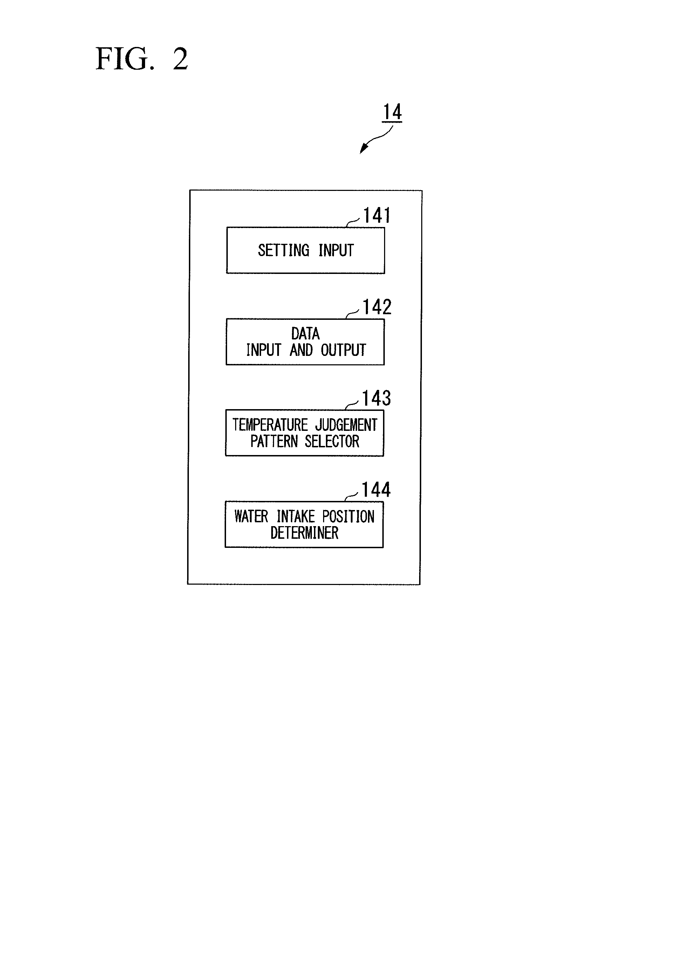

FIG. 2 is a block diagram showing the configuration of the water intake position controller 14 according to the first embodiment.

The water intake position controller 14 includes a computer, which includes a Central Processing Unit (CPU) for executing its control program and a storage device storing the control program and processed data. The storage device includes, for example, a Read Only Memory (ROM) and a Random Access Memory (RAM). The water intake position controller 14 implements, by executing the control program, each function of a setting input 141, a data input and output 142, a temperature judgement pattern selector 143, and a water intake position determiner 144.

The setting input 141 receives user operations and generates input signals based on the received user operations. The input signals include, for example, driving mode signals, each of which indicates a driving mode, planned water intake amount signals, each of which indicates a planned water intake amount, setting temperature signals, each of which indicates a setting temperature, and operation mode signals, each of which indicates an operation mode described later. The setting input 141 inputs the planned water intake amount signals into the temperature judgement pattern selector 143. The setting input 141 inputs the setting temperature signals and the operation mode signals into the water intake position determiner 144. The setting input 141 includes, for example, a keyboard, a mouse, a touchpad, and other input devices.

The data input and output 142 receives the temperature distribution measured data from the temperature distribution meter 12 and inputs the received temperature distribution measured data into the water intake position determiner 144. The data input and output 142 receives flow rate signals from the water flow meter 13 and input the received flow rate signals into the temperature judgement pattern selector 143. The data input and output 142 inputs the water intake position control signals, which have been received from the water intake position determiner 144, into the water intake 21. The data input and output 142 includes, for example, a data input and output interface.

The temperature judgement pattern selector 143 selects a temperature judgement pattern based on the flow rate signal, which has been received via the data input and output 142, and the planned water intake amount signal, which has been received from the setting input 141. The temperature judgement pattern defines a handling aspect of a temperature distribution used to determine the water intake position, for example, a size of a temperature measuring unit region (temperature measuring block), a water intake water layers coordinate based on flow rate and flow direction. For example, the larger the planned water intake amount indicated by the planned water intake amount signal is, the larger the temperature measuring block determined by the temperature judgement pattern selector 143 is. The temperature distribution measuring region is subdivided and each subdivided region corresponds to the temperature measuring block. The temperature measuring block is associated with a group of measured temperature values which is effective when the water intake position determiner 144 determines the water intake position.

The temperature judgement pattern selector 143 determines a water intake water layers coordinate on the basis of the predetermined position of the water intake 21. The water intake water layers coordinate is farther from the predetermined position in the opposite direction to the flow direction as the flow rate increases. The temperature judgement pattern selector 143 selects a temperature measuring block, which has the determined water intake water layers coordinate as a representative position (for example, center). Thereby, this enables the water intake position determiner 144 to determine the water intake position based on the temperature distribution, which has been transferred by the water flow in the period of time from the measuring process of the temperature distribution to the control process of the water intake position. The temperature judgement pattern selector 143 generates a temperature judgement pattern signal, which indicates the selected temperature judgement pattern (for example, the size of the temperature measuring block, the water intake water layers coordinate) and inputs the generated temperature judgement pattern signal into the water intake position determiner 144.

The water intake position determiner 144 processes the temperature distribution indicated by the temperature distribution measuring data, which has been received via the data input and output 142 based on the temperature judgement pattern indicated by the temperature judgement pattern signal, which has been received from the temperature judgement pattern selector 143. Thereby, the water intake position determiner 144 determines the water intake position.

The water intake position determiner 144 specifies the water intake water layers coordinate indicated by the temperature judgement pattern signal and sets candidate blocks, each of which includes a representative position (for example, center). The representative positions included in the candidate blocks are distributed along the vertical direction based on the specified water intake water layers coordinate. The size of the candidate block is determined so as to be the same as that of the temperature measuring block indicated by the temperature judgement pattern signal. The water intake position determiner 144 calculates a representative temperature of each of the set candidate blocks. The representative temperature may be a temperature, which represents the temperature distribution of each candidate block, for example, one of an average value, a mode value, and a median value.

The water intake position determiner 144 determines the water intake position based on the representative temperature of each candidate block and the operation mode indicated by the operation mode signal, which has been received from the setting input 141. The operation mode indicates the type of the target temperature, which is referred when the water intake position is determined. The operation mode is, for example, one of a maximum temperature mode, a minimum temperature mode, and a preset temperature mode. The water intake position determiner 144 determines, as a selected block, the candidate block having the representative temperature, which is equal to or the closest to the target temperature. The water intake position determiner 144 determines the water intake position, which corresponds to the selected block determined with reference to the water intake position data. The water intake position data indicates the correspondence relationship between the representative position of the selected block and the water intake position. The water intake position data is previously set in the water intake position determiner 144. The water intake positon is, for example, the position of a water intake port described later. The water intake port is positioned at the same depth as that of the representative position of the candidate block. The water intake position determiner 144 generates water intake position control signals, each of which indicates a water intake from the determined water intake position. The water intake position determiner 144 inputs the generated water intake position control signals into the water intake 21.

### (Configuration of water intake)

Hereinafter, the configuration of the water intake 21 will be described.

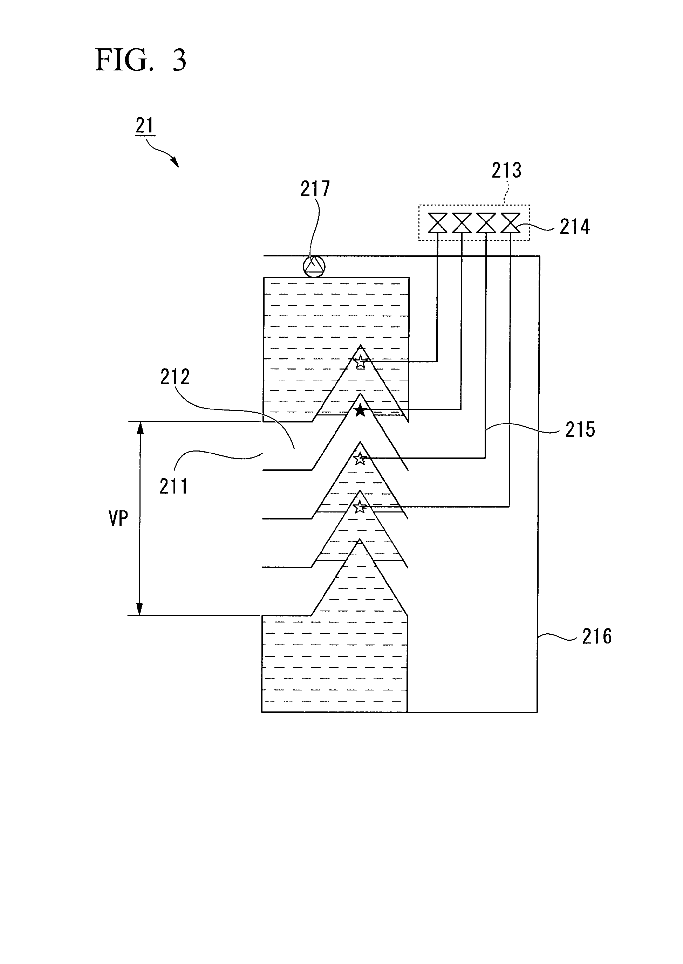

FIG. 3 is a diagram schematically showing the configuration of the water intake 21 according to the first embodiment.

In the configuration shown in FIG. 3, the water intake 21 is a continuous siphon type water intake facility.

The water intake 21 includes a plurality of water intake pipes 212, a water intake position adjuster 213, a plurality of air supply and exhaust pipes 215, a water pipe 216, and a water intake pump 217. The number of the air supply and exhaust pipes 215 is the same as that of the water intake pipes 212.

The water intake pipes 212 have the same shape as each other and are arranged adjacently to each other along the longitudinal direction of the water pipe 216. Each water intake pipe 212 has a flexion, which has an inverted V-shaped from. The top of the flexion is connected to one end of the air supply and exhaust pipe 215. One end of the water intake pipe 212 is connected to the water pipe 216 and the other end of the water intake pipe 212 is opened to outside (under water). The other end forms a water intake port 211. When compressed air is supplied (air supply) from the air supply and exhaust pipe 215 to the flexion, water input into the water intake pipe 212 is stopped (water stop). When the air is exhausted from the flexion to the one end of the air supply and exhaust pipe 215, water is input into the water intake pipe 212 from the water intake port 211 and the water is transferred from the one end of the water intake pipe 212 to the water pipe 216 (passing water). The region where the water intake ports 211 are arranged corresponds to the water intake position variable range VP and the position of the water intake port 211 of the water intake pipe 212, which has been exhausted, corresponds to the water intake position.

The water intake position adjuster 213 adjusts the water intake position by referring the water intake position control signal received from the water intake position determiner 144 and determining at least one of the water intake pipes 212, through which water is passed, and other water intake pipes 212, which stop water. The water intake position adjuster 213 includes a plurality of valves 214 and a compressor (not shown). The number of the valves 214 is equal to that of the water intake pipes 212. Each valve 214 includes three terminals (terminals 1 to 3, not shown). The terminal 1 is connected to the compressor (not shown), the terminal 2 is opened to outside (atmosphere), and the terminal 3 is the other end of the air supply and exhaust pipe 215.

The water intake position adjuster 213 opens the path between the terminal 2 and the terminal 3 of one valve 214, which corresponds to the water intake position indicated by the water intake position control signal, and closes the path between the terminal 1 and the terminal 3. At this time, compressed air is transferred from the other end of the air supply and exhaust pipe 215 to the terminal 2 via the terminal 3 and is exhausted from the terminal 2 to the outside. Thereby, water is passed through the water intake pipe 212.

The water intake position adjuster 213 closes the path between the terminal 2 and the terminal 3 of other valve 214 and opens the path between the terminal 1 and the terminal 3. At this time, compressed air supplied from the compressor is supplied from the terminal 1 to one water intake pipe 212 via the terminal 3 and the air supply and exhaust pipe 215. Thereby, water is stopped by the one water intake pipe 212.

The water pipe 216 is connected to one end of each water intake pipe 212. The water intake pump 217 is provided at one end of the water pipe 216.

The water intake pump 217 takes water, which has been transferred from each water intake pipe 212 and has filled the water pipe 216, and supplies the water to the water utilizing facility 31. The water intake pump 217 may receive the planned water intake amount signals from the setting input 141 and take water based on the received planned water intake amount.

### (Water intake process)

Hereinafter, the water intake process according to the first embodiment will be described.

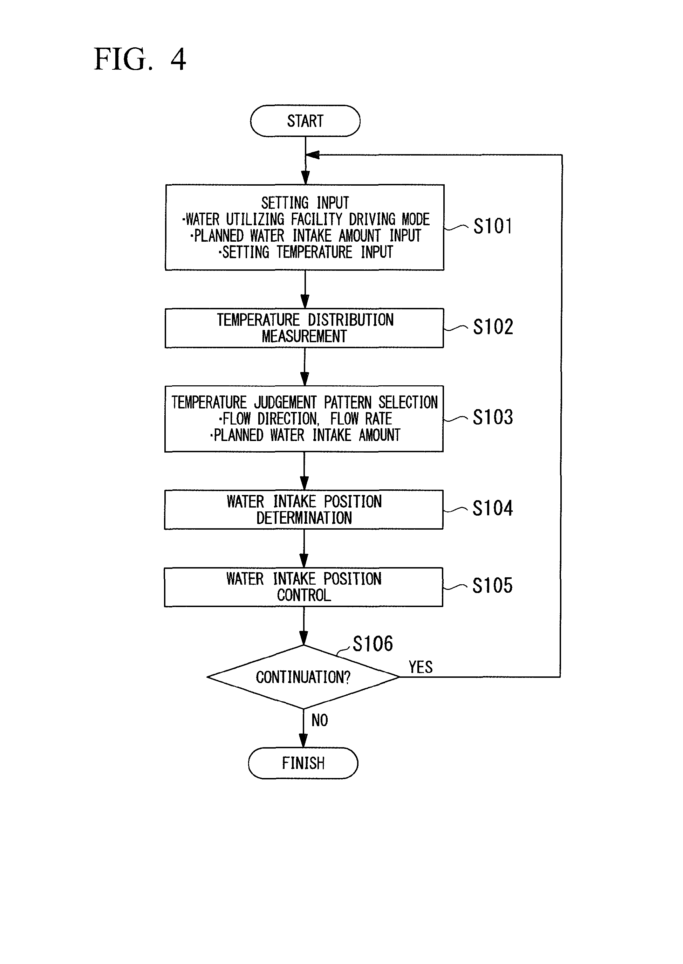

FIG. 4 is a flowchart showing the water intake process according to the first embodiment.

(Step S101) A driving mode, a planned water intake amount, a setting temperature are input into the setting input 141 included in the water intake positon controller 14 in accordance with the input operation. When a water utilizing facility driving mode as the driving mode, the planned water intake amount, and the setting temperature are set to the setting input 141, the process proceeds to a step S102.

(Step S102) The temperature distribution meter 12 measures the temperature distribution in the temperature distribution measuring range and inputs temperature distribution measuring data, which indicates the measured temperature distribution, into the water intake positon controller 14. The water intake position determiner 144 included in the water intake positon controller 14 receives the temperature distribution measuring data from the temperature distribution meter 12. Then, the process proceeds to a step S103.

(Step S103) The temperature judgement pattern selector 143 included in the water intake positon controller 14 selects a temperature judgement pattern based on the planned water intake amount set by the setting input 141 and the flow direction and flow rate indicated by the flow rate signal, which has been received from the water amount meter 13. Then, the process proceeds to a step S104. The selection process of the temperature judgement pattern will be described later.

(Step S104) The water intake position determiner 144 processes the temperature distribution indicated by the temperature distribution measured data, which has been received via the dater input and output 142, and determines the water intake position, in accordance with the temperature judgement pattern indicated by the temperature judgement patter signal, which has been received from the temperature judgement pattern selector 143. The water intake position determiner 144 generates a water intake position control signal, which indicates the determined water intake position, and inputs the generated water intake position control signal into the water intake 21. Then, the process proceeds to a step S105. The determination process of the water intake position will be described later.

(Step S105) The water intake position adjuster 213 included in the water intake 21 adjusts the water intake positon based on the water intake position control signal. Then, the process proceeds to a step S106.

(Step S106) The setting input 141 included in the water intake positon controller 14 determines whether or not the process is continued. For example, when the setting input 141 receives an operation, which instructs the stopping of the process, the setting input 141 determines the stopping of the process. Otherwise the setting input 141 determines the continuation of the process. When the setting input 141 determines the continuation of the process (the step S 106, YES), the process returns to the step S 101. When the setting input 141 determines the stopping of the process (the step S106, NO), the process is finished.

### (Selection process of temperature judgment pattern)

Hereinafter, the selection process of temperature judgment pattern will be described.

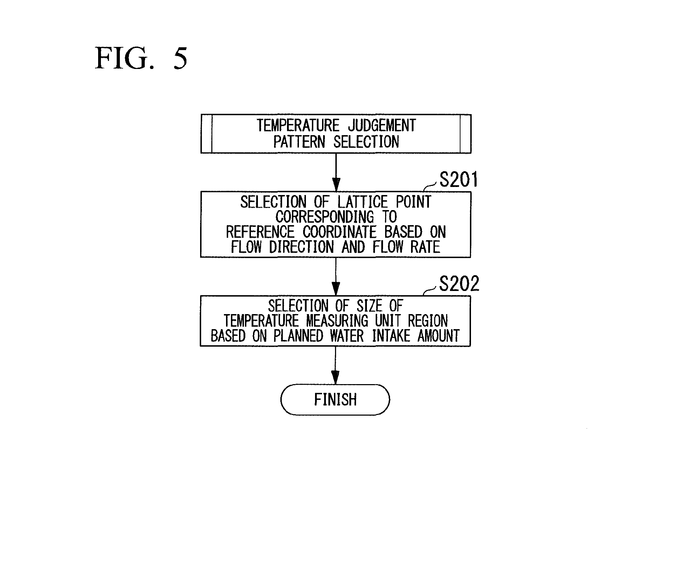

FIG. 5 is a flowchart showing the selection process of temperature judgement pattern according to the first embodiment.

(Step S201) The temperature judgment pattern selector 143 determines a water intake water layers coordinate based on the flow direction and flow rate indicated by the flow rate signal, which has been received via the date input and output 142. The water intake water layers coordinate is determined on the basis of the predetermined position of the water intake 21 located in the temperature distribution measuring range. The water intake water layers coordinate is farther from the predetermined position in the opposite direction to the flow direction as the flow rate increases. The temperature judgment pattern selector 143 selects a lattice point, which corresponds to the water intake water layers coordinate. When a lattice point is existed on the water intake water layers coordinate, the temperature judgment pattern selector 143 selects the lattice point. When a lattice point is not existed on the water intake water layers coordinate, the temperature judgment pattern selector 143 selects a plurality of lattice points in a predetermined range including the water intake water layers coordinate (for example, interval d). Then, the process proceeds to a step S202.

(Step S202) The temperature judgment pattern selector 143 determines the size of the block based on the planned water intake amount signal received from the setting input 141 and determines a temperature measuring unit region. Then, the process shown in FIG. 5 is finished.

Hereinafter, examples of water intake water layers coordinates determined by the temperature judgment pattern selector 143 will be described.

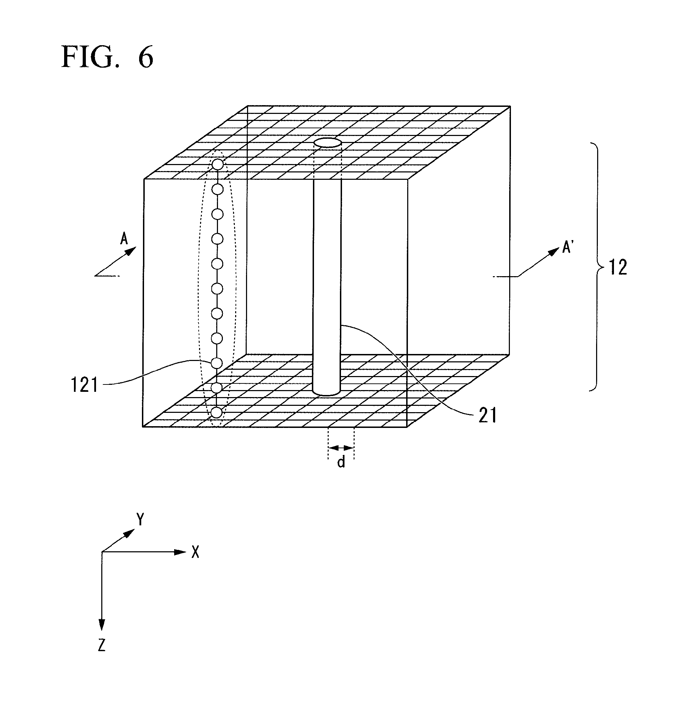

FIG. 6 is a diagram showing an example of temperature distribution measurement ranges.

In the example shown in FIG. 6, the temperature distribution measurement range is a cubic region where a plurality of temperature distribution sensors 121 included in the temperature distribution meter 12 are distributed. The temperature distribution sensors 121 are arranged on the lattice points, respectively. The lattice points are separated to each other at intervals of d. In the temperature distribution measuring range, the number of lattice points in each of the X-direction, Y-direction, and Z-direction is equal to eleven. The water intake 21 has a cylindrical shape. The center axis of the water intake 21 is directed toward the Z-direction (water depth direction) and is passed through the center point of the X-Y plane in the temperature distribution measuring range. Eleven white circles surrounded by a dashed line represent the temperature distribution sensors 121, which are arranged at the lattice points having the third minimum value on the X-coordinate and the third minimum value on the Y-coordinate. The eleven temperature distribution sensors 121 are arranged in the Z-direction.

Hereinafter, a determination process of a group of temperature distribution sensors by temperature judgment pattern selector 143 will be described. Each temperature distribution sensor calculates water temperature. The water intake water layers coordinate (X, Y) of the group of temperature distribution sensors is determined based on the flow direction and flow rate. A predetermined position (for example, center) in the horizontal plane of the water intake 21 is defined as a water intake coordinate. In particular, a position, which is separated from the water intake coordinate by a distance D based on the flow rate in the opposite direction to the flow direction, is defined as the water intake water layers coordinate. The distance D from the water intake coordinate to the water intake water layers coordinate is determined based on the flow rate. The faster the flow rate is, the larger the distance D is. Thereby, the position of the water intake water layers coordinate is determined so as to be separated from the water intake coordinate.

Hereinafter, an example will be described where four types of distances D, which are determined by the temperature judgment pattern selector 143 based on the flow rate, are defined. The four types of distances D include a distance 3, a distance 2, a distance 1, and a distance 0, which are associated with a flow rate (high), a flow rate (middle), a flow rate (low), and a flow rate (0), respectively. The distance 0 is 0. The distance 1 is a predetermined positive value greater than 0, the distance 2 is a predetermined positive value greater than the distance 1, and the distance 3 is a predetermined positive value greater than the distance 2. The flow rate (high), flow rate (middle), and flow rate (low) mean a first range including flow rates equal to or greater than a flow rate 3, a second range including flow rates equal to or greater than a flow rate 2 and less than the flow rate 3, and a third range including flow rates equal to or greater than a flow rate 1 and less than the flow rate 2, respectively. The flow rate (0) means that the flow rate is 0. The flow rate 1 is a predetermined positive value greater than 0, the flow rate 2 is a predetermined positive value greater than the flow rate 1, and the flow rate 3 is a predetermined positive value greater than the flow rate 2.

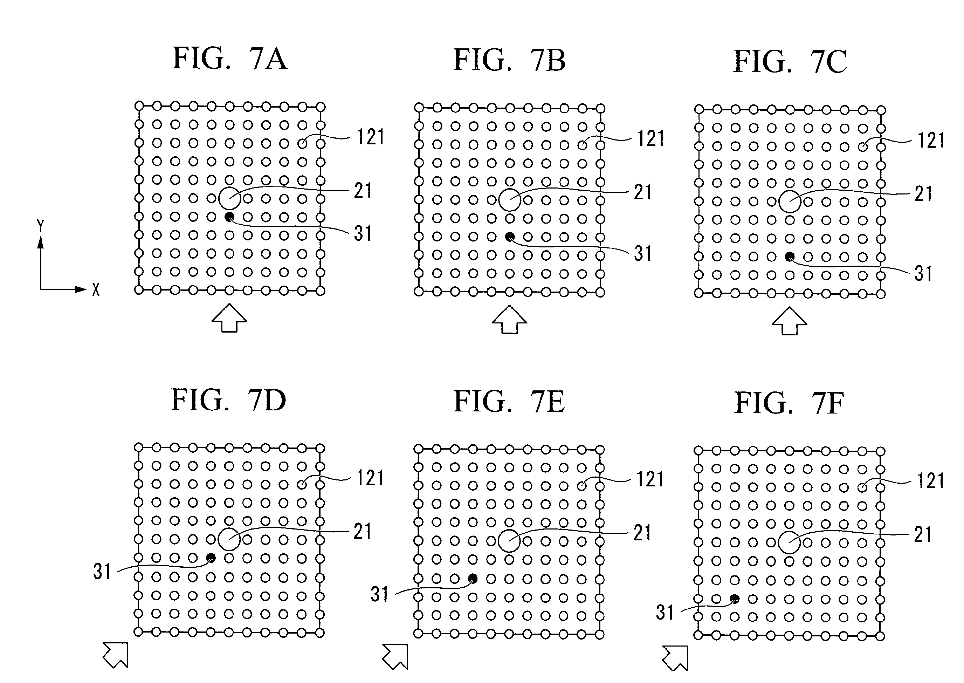

Each of FIGS. 7A to 7F is a cross-section diagram showing an example of water intake water layers coordinates determined by the temperature judgement pattern selector 143. In FIGS. 7A to 7F, in order to simplify the description, the case of distance 0 is omitted.

Each of FIGS. 7A to 7F shows the distribution of the temperature distribution sensors 121 disposed on the A-A' cross section shown in FIG. 6. The A-A' cross section is, for example, a horizontal plane passing through the center of the temperature distribution measuring range. The cross section of the water intake 21 is shown at the center of the distribution of the temperature distribution sensors 121. A black circle represents a water intake water layers coordinate 31. The direction and length of an arrow located below the distribution of the temperature distribution sensors 121 mean the flow direction and flow rate, respectively.

FIG. 7A shows the water intake water layers coordinate 31 determined when the flow direction is the positive direction (upward) of the Y-direction and the flow rate is in the flow rate (low). FIG. 7B shows the water intake water layers coordinate 31 determined when the flow direction is the positive direction (upward) of the Y-direction and the flow rate is in the flow rate (middle). FIG. 7C shows the water intake water layers coordinate 31 determined when the flow direction is the positive direction (upward) of the Y-direction and the flow rate is in the flow rate (high). When the flow rate is in the flow rate (low), the water intake water layers coordinate 31 is positioned separately from the center of the distribution by d in the negative direction (downward) of the Y-coordinate. When the flow rate is in the flow rate (middle), the water intake water layers coordinate 31 is positioned separately from the center of the distribution by 2d in the negative direction (downward) of the Y-coordinate. When the flow rate is in the flow rate (high), the water intake water layers coordinate 31 is positioned separately from the center of the distribution by 3d in the negative direction (downward) of the Y-coordinate.

FIG. 7D shows the water intake water layers coordinate 31 determined when the flow direction is inclined from the positive direction of the X-coordinate to the positive direction of the Y-coordinate by 45° (upper right direction) and the flow rate is in the flow rate (low). FIG. 7E shows the water intake water layers coordinate 31 determined when the flow direction is inclined from the positive direction of the X-coordinate to the positive direction of the Y-coordinate by 45° (upper right direction) and the flow rate is in the flow rate (middle). FIG. 7F shows the water intake water layers coordinate 31 determined when the flow direction is inclined from the positive direction of the X-coordinate to the positive direction of the Y-coordinate by 45° (upper right direction) and the flow rate is in the flow rate (high). When the flow rate is in the flow rate (low), the water intake water layers coordinate 31 is positioned separately from the center of the distribution by √2d in a direction inclined from the negative direction of the X-coordinate to the negative direction of the Y-coordinate by 45° (lower left direction). When the flow rate is in the flow rate (middle), the water intake water layers coordinate 31 is positioned separately from the center of the distribution by 2√2d in a direction inclined from the negative direction of the X-coordinate to the negative direction of the Y-coordinate by 45° (lower left direction). When the flow rate is in the flow rate (high), the water intake water layers coordinate 31 is positioned separately from the center of the distribution by 3√2d in a direction inclined from the negative direction of the X-coordinate to the negative direction of the Y-coordinate by 45° (lower left direction).

For convenience of explanation, the distance D shown in FIG. 7A is different from that of FIG. 7D, the distance D shown in FIG. 7B is different from that of FIG. 7E, and the distance D shown in FIG. 7C is different from that of FIG. 7F. However, the distance D determined based on the flow rate is constant regardless the flow direction. When the water intake water layers coordinate 31 determined based on the flow direction and the predetermined distance D (for example, distances 1 to 3) is not located on the lattice point, the water intake water layers coordinate 31 determined by the temperature judgment pattern selector 143 may be move to a lattice point, which is the closest to the determined water intake water layers coordinate 31.

Hereinafter, size examples of the temperature measuring unit region (temperature measuring block) determined by the temperature judgment pattern selector 143 will be described.

Hereinafter, an example will be described where the size of the temperature measuring block has three types. The size of the temperature measuring block is determined by the temperature judgment pattern selector 143 based on the planned water intake amount.

Each temperature measuring block is a region including one or more lattice points. The temperature measuring blocks includes a first temperature measuring block, a second temperature measuring block, and a third temperature measuring block, which are referred to as a large block, a middle block, and a small block, respectively, considering their sizes. For example, the large block is a cube having five lattice points each side in the X-direction, the Y-direction, and the Z-direction, the middle block is a cube having three lattice points each side, and the small block is a cube having one lattice point each side. The large block, the middle block, and the small block are associated with each planned water intake amount, in particular, a planned water intake amount (large), a planned water intake amount (middle), and a planned water intake amount (small), respectively. The planned water intake amount (large), the planned water intake amount (middle), and the planned water intake amount (small) mean a first range including water intake amounts equal to or greater than a water intake amount 2, a second range including water intake amounts equal to or greater than a water intake amount 1 and less than the water intake amount 2, and a third range including water intake amounts equal to or greater than 0 and less than the water intake amount 1, respectively. The water intake amount 1 is a predetermined positive value greater than 0, and the water intake amount 2 is a predetermined positive value greater than the water intake amount 1.

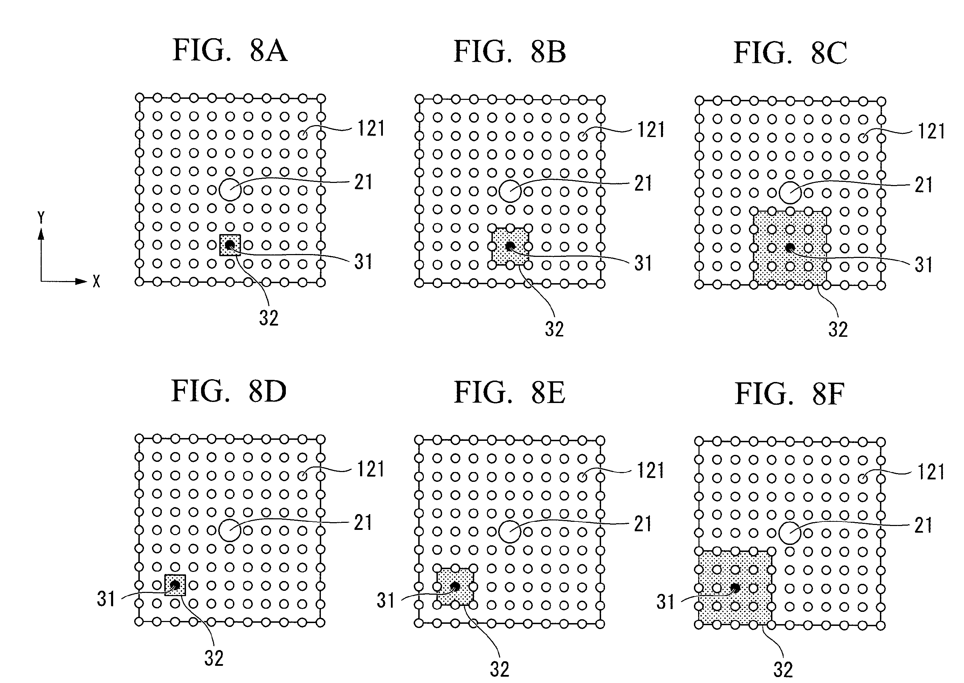

Each of FIGS. 8A to 8F is a cross-section diagram showing a size example of a temperature measuring block determined by the temperature judgement pattern selector 143.

Similar to FIGS. 7A to 7F, each of FIGS 8A to 8F shows the distribution of the temperature distribution sensors 121, the water intake 21, and the water intake water layers coordinate 31 disposed on the A-A' cross section shown in FIG. 6. Each filled quadrilateral region centered at the water intake water layers coordinate 31 indicates the temperature measuring block 32.

FIG. 8A shows the temperature measuring block 32 determined when the flow direction is the positive direction (upward) of the Y-coordinate and the flow rate is in the flow rate (high) (FIG. 7C), and the planned water intake amount is in the planned intake amount (small). FIG. 8B shows the temperature measuring block 32 determined when the flow direction is the positive direction (upward) of the Y-coordinate and the flow rate is in the flow rate (high) (FIG. 7C), and the planned water intake amount is in the planned intake amount (middle). FIG. 8C shows the temperature measuring block 32 determined when the flow direction is the positive direction (upward) of the Y-coordinate and the flow rate is in the flow rate (high) (FIG. 7C), and the planned water intake amount is in the planned intake amount (large). When the planned water intake amount is in the planned intake amount (small), the small block is selected as the temperature measuring block 32. When the planned water intake amount is in the planned intake amount (middle), the middle block is selected as the temperature measuring block 32. When the planned water intake amount is in the planned intake amount (large), the large block is selected as the temperature measuring block 32.

FIG. 8D shows the temperature measuring block 32 determined when the flow direction is inclined from the positive direction of the X-coordinate to the positive direction of the Y-coordinate by 45° (upper right direction) and the flow rate is in the flow rate (high) (FIG. 7F), and the planned water intake amount is in the planned intake amount (small). FIG. 8E shows the temperature measuring block 32 determined when the flow direction is inclined from the positive direction of the X-coordinate to the positive direction of the Y-coordinate by 45° (upper right direction) and the flow rate is in the flow rate (high) (FIG. 7F), and the planned water intake amount is in the planned intake amount (middle). FIG. 8F shows the temperature measuring block 32 determined when the flow direction is inclined from the positive direction of the X-coordinate to the positive direction of the Y-coordinate by 45° (upper right direction) and the flow rate is in the flow rate (high) (FIG. 7F), and the planned water intake amount is in the planned intake amount (large). When the planned water intake amount is in the planned intake amount (small), the small block is selected as the temperature measuring block 32. When the planned water intake amount is in the planned intake amount (middle), the middle block is selected as the temperature measuring block 32. When the planned water intake amount is in the planned intake amount (large), the large block is selected as the temperature measuring block 32.

Each setting value, for example, the distances 1 to 3, the water intake amounts 1 to 3, the number of lattice points of each type of the temperature measuring block may be determined by previously performing examinations.

The example where the temperature distribution sensor 121 is located on each lattice point was described with reference to FIGS. 7A to 7F and FIGS. 8A to 8F. An optical fiber temperature sensor as a temperature distribution sensor may be located on each side between adjacent lattice points.

### (Determination process of water intake position)

Hereinafter, an example of determination processes of water intake position will be described.

As described above, the water intake position determiner 144 determines the candidate blocks, each of which includes a representative position. The representative positions included in the candidate blocks are distributed along the vertical direction based on the water intake water layers coordinate determined by the temperature judgment pattern selector 143. The determined candidate blocks include a block including a representative position, which corresponds to the water intake water layers coordinate determined by the temperature judgment pattern selector 143.

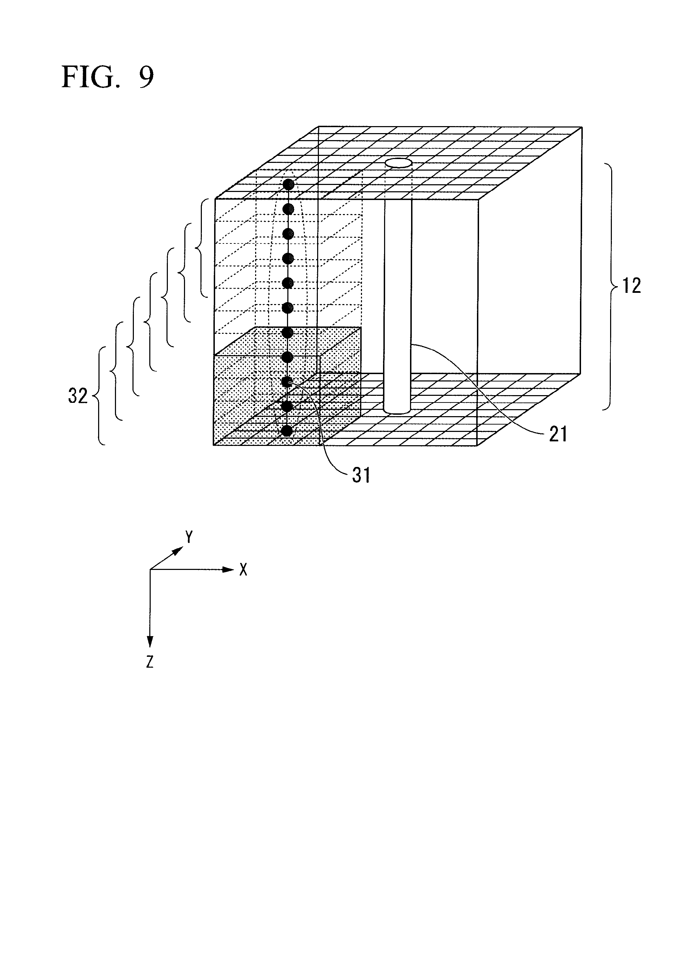

FIG. 9 is a cubic diagram showing an example of candidate blocks determined by the water intake position determiner 144.

In the configuration shown in FIG. 9, the temperature distribution measuring range is similar to that of FIG. 6 and the water intake water layers coordinate 31 is similar to that of FIG. 8F. The water intake position determiner 144 determines candidate blocks, each of which includes a representative position. The representative position is located on each of lattice points, which are distributed along the vertical direction from the water intake water layers coordinate 31. Each of the water intake water layers coordinate 31 and the representative position is represented by a black circle and each cube, which is centered at the representative position, indicates the candidate block. Among these cubes, the filled site indicates the temperature measuring block 32 determined by the temperature judgement pattern selector 143. The number of lattice points in each side of the candidate block is equal to five. The configuration shown in FIG. 9 includes seven candidate blocks along the vertical direction (Z-direction). The seven candidate blocks are included in the temperature distribution measuring range.

The water intake position determiner 144 calculates the representative temperature of each preset candidate block, for example, the average value of the temperature of each candidate block. The water intake position determiner 144 performs a water intake position determination process described below and determines the water intake position.

Each of the water intake water layers coordinate 31, the representative position, and each vertex of the candidate block is not always located on any lattice point. In this case, the water intake position determiner 144 may perform a publicly known interpolation process (for example, linear interpolation) based on temperatures measured by the temperature distribution sensors 121 on the lattice points and may calculate the temperature distribution of each candidate block.

In addition, if the temperature distribution meter 12 includes an optical fiber temperature sensor, the water intake position determiner 144 may perform a publicly known interpolation process (for example, linear interpolation) based on measured temperatures and may calculate the temperature distribution of each candidate block.

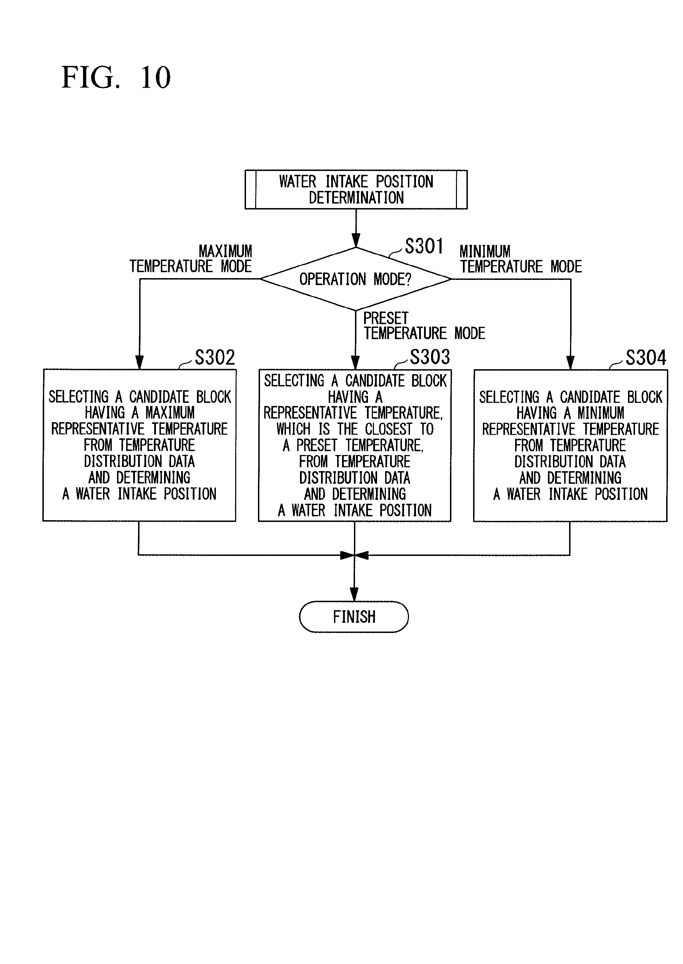

FIG. 10 is a flowchart showing a determination process of a water intake position according to the first embodiment.

(Step S301) The water intake position determiner 144 determines whether the operation mode set by the setting input 141 is the maximum temperature mode, the preset temperature mode, or the minimum temperature mode. When the water intake position determiner 144 determines that the operation mode is the maximum temperature mode (step S301, Maximum temperature mode), the process proceeds to a step S302. When the water intake position determiner 144 determines that the operation mode is the preset temperature mode (step S301, Preset temperature mode), the process proceeds to a step S303. When the water intake position determiner 144 determines that the operation mode is the minimum temperature mode (step S301, Minimum temperature mode), the process proceeds to a step S304.

(Step S302) The water intake position determiner 144 selects, as a selection block, a candidate block having a maximum representative temperature calculated from the temperature distribution data, refers the water intake position data, and determines the water intake position, which corresponds to the selection block. Then, the process shown in FIG. 10 is finished.

(Step S303) The water intake position determiner 144 selects, as a selection block, a candidate block having a representative temperature, which is calculated from the temperature distribution data and is the closest to the preset temperature set by the setting input 141, refers the water intake position data, and determines the water intake position, which corresponds to the selection block. Then, the process shown in FIG. 10 is finished.

(Step S304) The water intake position determiner 144 selects, as a selection block, a candidate block having a minimum representative temperature calculated from the temperature distribution data, refers the water intake position data, and determines the water intake position, which corresponds to the selection block. Then, the process shown in FIG. 10 is finished.

The water intake position determiner 144 generates a water intake position control signal, which indicates the water intake from the determined water intake position, and inputs the generated water intake position control signal into the water intake 21. Thereby, the water intake position determiner 144 makes the water intake 21 take water from the determined water intake position. When the maximum temperature mode is set, water is taken from a water temperature layer, which has the same temperature as that in the maximum temperature region in the temperature measuring range. Therefore, water having the highest possible temperature is taken. When the preset temperature mode is set, water is taken from a water temperature layer, which has the same temperature as that in the region having the closest temperature to the preset temperature. Therefore, water having the closest temperature to the preset temperature is taken. When the minimum temperature mode is set, water is taken from a water temperature layer, which has the same temperature as that in the minimum temperature region in the temperature measuring range. Therefore, water having the lowest possible temperature is taken. As described above, by setting the operation mode based on the target temperature, the water utilizing facility 31 can take the water having the target temperature in accordance with the utilization.

As described above, according to the first embodiment, the water intake position determiner 144 determines the water intake position of the water intake 21, which transfers water from the temperature distribution measuring range based on the temperature distribution measured by the temperature distribution meter 12 in the predetermined temperature distribution measuring range under water. The water intake position adjuster 213 adjusts the water intake position of the water intake 21 to make the water intake position identical to the position determined by the water intake position determiner 144.

According to this configuration, water is taken from the water intake position determined based on the measured temperature distribution. Therefore, water, which has a temperature suitable for the purpose of utilization, can be taken based on the temperature distribution. Therefore, the water resources can be effectively utilized and the facility effectiveness of the water utilizing facilities can be improved.

In addition, according to the first embodiment, the water intake position determiner 144 processes the temperature distribution measured by the temperature distribution meter 12 based on the water flow measured by the water flow meter 13.

According to this configuration, the water intake position is determined in consideration of the changes in the temperature distribution due to the water flow. Therefore, water, which has a temperature further suitable for the purpose of utilization, can be taken.

In addition, according to the first embodiment, the water intake position determiner 144 determines the water intake position based on the temperature distribution over the region farther from the water intake port 211 in the opposite direction to the flow direction measured by the water flow meter 13 as the flow rate measured by the water flow meter 13 increases.

According to this configuration, the temperature distribution, which is changed based on the flow rate and flow direction, is estimated and the water intake position is determined based on the estimated temperature distribution. Therefore, water, which has a temperature further suitable for the purpose of utilization, can be taken.

In addition, according to the first embodiment, the temperature distribution measuring region is subdivided into the temperature measuring blocks and the water intake position determiner 144 determines the water intake position based on the temperature of each temperature measuring block. The size of the temperature measuring block increases as the water intake amount of the water intake 21 increases.

According to this configuration, the temperature distribution in the temperature measuring block, the size of which increases as the water intake amount increases, is used to determine the water intake position. The influence of the change in the temperature distribution in the vicinity of the water intake port increases as the water intake amount increases. Since this influence of the change in the temperature distribution can be considered, water, which has a temperature further suitable for the purpose of utilization, can be taken.

### (Second embodiment)

Hereinafter, the second embodiment of the present invention will be described. Blocks that correspond to those in the first embodiment are assigned the same reference numerals. The detail descriptions of the blocks will be omitted.

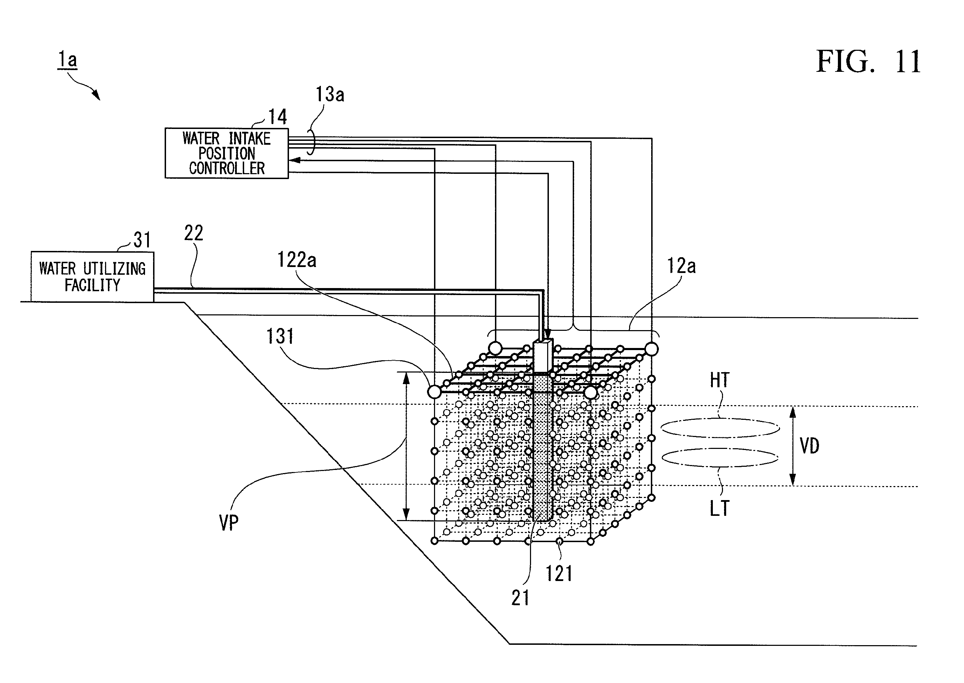

FIG. 11 is a diagram schematically showing the configuration of a water intake system 1 a according to the second embodiment.

FIG. 11 shows a configuration example where the water intake 21 is supported by a supporter 122a included in a temperature distribution meter 12a. This configuration may be used when the water intake 21 is located in a region such as an offing, which is sufficiently distant from the coast and has sufficient depth (for example, equal to or greater than 5d).

The water intake system 1a includes a temperature distribution meter 12a, a water flow meter 13a, the water intake position controller 14, the water intake 21, and the water pipe 22.

The temperature distribution meter 12a includes a supporter 122a instead of the supporter 12 included in the temperature distribution meter 12 (FIG. 1). Similar to the supporter 122 (FIG. 1), the supporter 122a supports a plurality of temperature distribution sensors 121 and supports the water intake 21 at the center of the supporter 122a. The longitudinal direction of the water intake 21 is directed to the vertical direction.

The water flow meter 13a includes a plurality of flow rate sensors 131 (for example, four flow rate sensors 131). Each flow rate sensor 131 is supported by each vertex of the supporter 122a. Since each water rate sensor 131 is located distant from the water intake 21, the turbulence of the water flow due to the arrival of water to the water intake 21 is suppressed. The temperature judgement pattern selector 143 (FIG. 2) calculates a representative value (for example, an average value) of a flow rate vector indicated by a flow rate signal received from the each flow rate sensor 131 and selects a temperature judgement pattern using the flow rate and flow direction indicated by the representative value of the calculated flow rate vector.

As described above, according to the second embodiment, in addition to that the water intake system 1 a has the similar configuration to that of the above-stated first embodiment, the water intake 21 is supported by the supporter 122a included in the temperature distribution meter 12a.

According to this configuration, since the water intake 21 is not required to be supported by revetments, bottoms of water, or the like, the freedom of setting condition is increased. For example, water can be taken from a region, which is sufficiently distant from the coast and has sufficient depth.

### (Third embodiment)

Hereinafter, the third embodiment of the present invention will be described. Blocks that correspond to those in the first and second embodiments are assigned the same reference numerals. The detail descriptions of the blocks will be omitted.

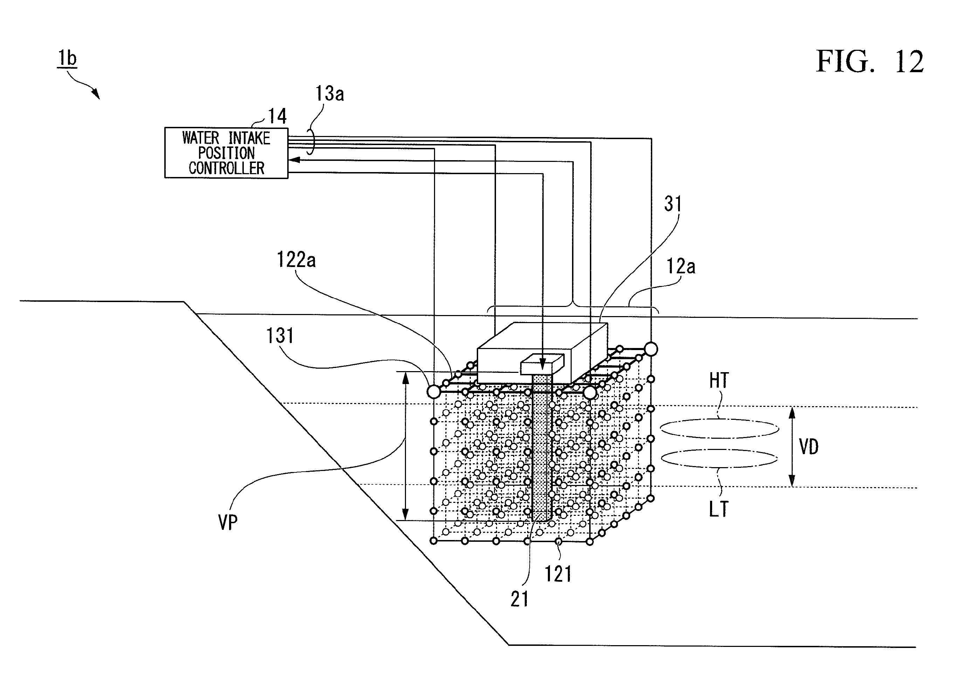

FIG. 12 is a diagram schematically showing the configuration of a water intake system 1b according to the third embodiment.

FIG. 12 shows a configuration where the water utilizing facility 31 is supported by the supporter 122a included in the temperature distribution meter 12a (floating type). Similar to the configuration shown in FIG. 11, the preset configuration may be used when the water intake 21 is located in a region, which is sufficiently distant from the coast and has sufficient depth.

The water intake system 1b includes the temperature distribution meter 12a, the water flow meter 13a, the water intake position controller 14, the water intake 21, and the water utilizing facility 31. In this configuration, the temperature distribution meter 12a, the water flow meter 13a, the water intake 21, and the water utilizing facility 31 configures an integrated floating body.

The water utilizing facility 31 is supported on the upper surface of the supporter 122a and is connected to the water intake 21. The water utilizing facility 31 receives the water from the water intake 21 and utilizes the received water.

As described above, according to the third embodiment, in addition to that the water intake system 1b has the similar configuration to those of the above-stated first and second embodiments, the water utilizing facility 31 is supported by the supporter 122a included in the temperature distribution meter 12a.

According to this configuration, since the water utilizing facility 31 is disposed in the vicinity of the water intake 21, the change in the temperature of the water taken by the water intake 21 due to the surrounding environment is suppressed. Since the water utilizing facility 31 utilizes water having temperature further close to the target temperature, the water utilizing facility 31 can effectively utilize water resources. In addition, the water pipe 22 for transferring water, which has been taken by the water intake 21, to the water utilizing facility 31, and the like can be omitted.

Although the foregoing has been a description of the several embodiments of the present invention with reference to the drawings, the present invention is not limited to the embodiments, and can be freely modified within the scope of the present invention.

For example, the embodiment has been described where each of the above-stated water intake systems 1, 1a, and 1b (FIGS. 1, 11, and 12) includes the water flow meter 13 or 13a (FIGS. 1, 11, and 12) as an environment observer for observing the environment in the temperature distribution measuring range or a predetermined range based on the temperature distribution measuring range, but the present invention is not limited to this embodiment. Each of the water intake systems 1, 1a, and 1b may include one of an air flow meter for measuring air flow (in other words, wind velocity and wind direction) (not shown), a weather observer for observing the weather (not shown), and a hydrographic conditions observer for observing hydrographic conditions (not shown), or combination thereof instead of the water flow meters 13 and 13a or in conjunction with the water flow meters 13 and 13a. In this case, the water intake position determiner 144 may correct the temperature distribution in further consideration of one of the wind velocity and wind direction measured by the air flow meter, the weather observed by the weather observer, and the hydrographic conditions observed by the hydrographic conditions observer, or combination thereof and may determine the water intake position based on the corrected temperature distribution.

When the flow rate is less than a predetermined threshold value of flow rate, the water flow meter 13 and 13a (FIGS. 1, 11, and 12) included in the water intake systems 1, 1 a, and 1 b (FIGS. 1, 11, and 12) may be omitted. In this case, the water intake position determiner 144 may omit the determination process of the water intake water layers coordinate based on the flow rate and flow direction.

In the above stated embodiments, the embodiment has been described where the temperature judgement pattern selector 143 selects the type of the block size from among the three candidates of the block size based on the planned water intake amount and selects one distance D, which is a distance from the water intake coordinate to the water intake water layers coordinate, from among the four candidates of the distance D based on the flow rate, but the present invention is not limited to this embodiment. The number of the candidates of the temperature measuring block size may be two, or equal to or greater than four. The number of the candidates of the distance D may be equal to or less than three, or equal to or greater than five. In addition, the number of the candidates of the temperature measuring block size may be equal to that of the candidates of the distance D.

In the above stated embodiments, the embodiment has been described where the number of the lattice points included in the supporter 122 or 122a (FIGS. 1,11, and 12) in the X-direction, the Y-direction, and the Z-direction are the same as each other, but the present invention is not limited to this embodiment. The number of the lattice points in the X-direction, the Y-direction, and the Z-direction may be different from each other. Among the X-direction, the Y-direction, and the Z-direction, the two directions have the same number of the lattice points as each other and the other direction has the different number of the lattice points from that of the two directions.

The embodiment has been described where the shape of the temperature distribution measuring range in each of the temperature distribution meters 12 and 12a is cubic, but the present invention is not limited to this embodiment. As long as the range includes the water intake 21, the range may be, for example, rectangular, circular, or ellipsoidal.

The embodiment has been described where the interval d between the adjacent temperature distribution sensors 121 included in the temperature distribution meter 12 or 12a is constant, but the present invention is not limited to this embodiment. The interval may be changed depending on the site.

In the water intake system 1 (FIG. 1), the water intake pit 23 and the water pipe 24 may be omitted and the water pipe 22 may be connected to the water utilizing facility 31. The water intake system 1 a (FIG. 11) may include the water intake pit 23 and the water pipe 24 and the water pipe 24 may be connected to the water utilizing facility 31.

## Claims

1. A method of taking water comprising:
determining a first position based on a temperature distribution in a predetermined measuring range under water; and
adjusting a water intake position to make the water intake position identical to the first position.

2. The method of taking the water according to Claim 1, wherein determining the first position comprises:
observing at least one of a water flow, an air flow, a weather, and hydrographic conditions;
processing the temperature distribution based on the at least one of the water flow, the air flow, the weather, and the hydrographic conditions; and
determining the first position based on the processed temperature distribution.

3. The method of taking the water according to Claim 2, wherein determining the first position comprises:
determining the first position based on the temperature distribution over a region farther from a water intake port as a flow rate of the observed water flow increases.

4. The method of taking the water according to Claim 2 or Claim 3, wherein determining the first position comprises:
determining the first position based on the temperature distribution over a region distanced from a water intake port in an opposite direction to the flow direction of the observed water flow.

5. The method of taking the water according to one of Claims 1 to 4, wherein determining the first position comprises:
determining the first position based on the temperature in each unit region defined by subdividing the measuring range.

6. The method of taking the water according to Claim 5, wherein determining the first position comprises:
determining a size of each unit region based on a water intake amount.

7. The method of taking the water according to Claim 5 or Claim 6, wherein determining the first position comprises:
determining a unit region having a temperature corresponding to a target temperature among the unit regions as the first position.

8. A water intake system comprising:
a temperature distribution meter configured to measure a temperature distribution in a predetermined measuring range under water;
a water intake configured to transfer water from the measuring range;
a water intake position determiner configured to determine a first position based on the temperature distribution; and
a water intake position adjuster configured to adjust a water intake position of the water intake to make the water intake position identical to the first position.

9. The water intake system according to Claim 8, wherein the water intake system further comprises:
an environment observer configured to observe at least one of a water flow, an air flow, a weather, and hydrographic conditions, and
the water intake position determiner is configured to process the temperature distribution measured by the temperature distribution meter based on the observation result of the environment observer.

10. The water intake system according to Claim 8 or Claim 9, wherein the temperature distribution meter comprises a plurality of temperature detectors, the temperature detectors being arranged in two directions intersecting each other and parallel to a water surface, and a water depth direction.

11. The water intake system according to Claim 9, wherein the water intake position determiner is configured to determine the first position based on the temperature distribution over a region farther from a water intake port of the water intake as a flow rate of the observed water flow increases.

12. The water intake system according to Claim 9 or Claim 11, wherein the water intake position determiner is configured to determine the first position based on the temperature distribution over a region distanced from a water intake port of the water intake in an opposite direction to the flow direction of the observed water flow.

13. The water intake system according to one of Claims 8 to 12, wherein the water intake position determiner is configured to determine the first position based on the temperature in each unit region defined by subdividing the measuring range.

14. The water intake system according to Claim 13, wherein the water intake position determiner is configured to determine a size of each unit region based on a water intake amount of the water intake.

15. The water intake system according to Claim 13 or Claim 14, wherein the water intake position determiner is configured to determine a unit region having a temperature corresponding to a target temperature among the unit regions as the first position.
